# EUROPÄISCHE PATENTSCHRIFT

(11) **EP 4 251 837 B1**
(45) Veröffentlichungstag und Bekanntmachung des Hinweises auf die Patenterteilung: **03.09.2025**
(21) Anmeldenummer: 21835753.1
(22) Anmeldetag: 14.12.2021
(51) Int. Cl.: E05F 11/48, E05F 15/689

(54) **FENSTERHEBER EINES KRAFTFAHRZEUGS**
WINDOW LIFTER FOR A MOTOR VEHICLE
LEVE-VITRE DESTINE A UN VEHICULE

(30) Priorität: 07.01.2021 DE 102021200084
(43) Veröffentlichungstag der Anmeldung: 04.10.2023
(73) Patentinhaber: Brose Fahrzeugteile SE & Co. Kommanditgesellschaft, Bamberg, 96052 Bamberg (DE)
(72) Erfinder: LICKO, Lubos, 97213 Nitrianske Pravno (SK); KRIEGER, Thomas, 96149 Breitengüßbach (DE); JÁNOS, Martin, 05361 Spisske Vlachy (SK)
(74) Vertreter: FDST Patentanwälte
(86) Internationale Anmeldenummer: PCT/EP2021/085583
(87) Internationale Veröffentlichungsnummer: WO 2022/148612

(56) Entgegenhaltungen:
- WO-A1-2011/095414
- DE-A1- 102007 030 044
- DE-A1- 102016 216 879
- US-A1- 2019 040 668

## Beschreibung

Die Erfindung betrifft einen Fensterheber für ein Kraftfahrzeug, mit einem Funktionsträger für mindestens eine einen Schienengleiter zur Halterung einer Fahrzeugscheibe schiebebeweglich führende Führungsschiene und mit einer Seilantriebsvorrichtung, gemäß dem Oberbegriff des Anspruchs. Ein derartiger Fensterheber ist beispielsweise aus der DE 10 2016 216 879 A1 bekannt. Sie betrifft weiter ein Verfahren zur Montage einer Seiltrommel in einen oder an einem Funktionsträger eines solchen Fensterhebers.

Bewegbare Fahrzeugfensterscheiben werden typischerweise durch elektrisch oder elektromotorisch betriebene Stellvorrichtungen als (Fahrzeug-)Fensterheber zwischen einer Schließstellung und einer Offenstellung verfahren. Ein solcher Fensterheber umfasst einen (elektrischen) Stellmotor als Seil- oder Stellantrieb sowie eine den Stellmotor mit der Fensterscheibe verbindende bzw. kraftübertragungstechnisch koppelnde Stellmechanik, welche einer Kraftfahrzeugtür oder einer Kraftfahrzeugkarosserie zugeordnet sind. Die Stellmechanik ist hierbei mittels mindestens eines an einer Führungsschiene verschiebebeweglich geführten Mitnehmers oder Schienengleiters mit Mitnehmerfunktion an die zu bewegende Fensterscheibe mechanisch angebunden.

Zur Führung des Schienengleiters an der Führungsschiene umfasst die Stellmechanik ein flexibles Zugmittel, zum Beispiel in Form eines Bowdenzugs oder eines zughüllenlosen (bowdenlosen) Zugseils, um die Fensterscheibe entlang des Verstellweges zwischen der Schließstellung und der Offenstellung zu bewegen. Das Zugseil wird in der Regel über Umlenkelemente, beispielsweise Umlenkrollen, des Fensterhebers geführt, welche ebenso wie die jeweilige Führungsschiene und der Stellantrieb als Teil einer Seilantriebsvorrichtung auf oder an einem nachfolgend als Funktionsträger bezeichneten Aggregate- oder Türmodulträger, beispielswiese in Form einer Türinnenplatte, angeordnet bzw. an diesem befestigt ist. Fensterheber mit derartigen Seilzug-Mechaniken werden auch als Seilzugfensterheber bezeichnet.

Die Seilantriebsvorrichtung umfasst üblicherweise eine vom Stell- oder Seilantrieb rotatorisch angetriebene Seiltrommel, die vom Zugseil umschlugen ist und hierzu eine helixförmige oder schraubenartige Seilrille (Seilnut) aufweist, in welcher das Zugseil, beispielsweise als Seilschlaufe, mit typischerweise mehreren axial beabstandeten Windungen einliegt. Die vom Zugseil umschlungene Seiltrommel, die in der Regel in einem Seilantriebsgehäuse an einer gehäuseseitigen Lagerstelle drehbar gelagert ist, wird mittels des (elektrischen) Stellmotors, üblicherweise über ein hiermit gekoppeltes Getriebe, insbesondere in Form eines Schneckengetriebes als 90°-Umlenkgetriebe, rotatorisch angetrieben. Mit anderen Worten bilden der Stellantrieb, insbesondere ein Elektromotor mit angekoppeltem Getriebe, und das Seilantriebsgehäuse mit der darin aufgenommenen Seiltrommel, auf die das Zugseil aufgespult oder aufspulbar ist, die Seilantriebsvorrichtung.

In Folge einer Drehbewegung der Seiltrommel wird das Zugseil mit einem Seilabschnitt (Seilende) auf die Seiltrommel aufgewickelt und mit dem oder einem anderen Seilabschnitt (Seilende) von der Seiltrommel abgewickelt. Dadurch verschiebt sich die vom Zugseil gebildete Seilschlaufe, was wiederum zu einer Bewegung des Schienengleiters entlang der Führungsschiene und somit zu einer Verstellung der Fensterscheibe zwischen der Schließstellung und der Offenstellung führt.

Ein aus der DE 10 2018 201 023 A1 bekannter Fensterheber (Fensterheberbaugruppe) weist ein Seilantriebsgehäuse in dreiarmiger Sternform mit einer - bezogen auf die Drehachse der Seiltrommel - axial erhabenen Gehäusekontur und mit einer sich axial erstreckenden Gehäusewand auf, welche die Seiltrommel teilweise umschließt und zusammen mit der Gehäusekontur einen spitzwinkligen Ein- und Auslaufbereich für den ein- bzw. auslaufenden Seilabschnitt des Zugseils bildet.

Das Seilantriebsgehäuse ist üblicherweise baulich, konstruktiv und krafttechnisch für bestimmte Fahrzeug- oder Fahrzeugtürsysteme bzw. Türmodule ausgelegt und nicht ohne Weiteres auf andere Systeme übertragbar. So sind häufig bereits aufgrund unterschiedlicher Positionen, Befestigungsmuster und/oder Anschraubbilder sowie in Folge von Asymmetrien in der rechten und linken Fahrzeugtür, auch des gleichen Kraftfahrzeugs, unterschiedliche Formen oder verschiedene Designs des Seilantriebsgehäuses bereitzustellen. Dies ist in unerwünschter Weise mit einem entsprechend hohen Material-, Fertigungs- und Kostenaufwand verbunden.

Der Erfindung liegt die Aufgabe zugrunde, einen Fensterheber (Fensterhebersystem, Fensterheberbaugruppe) mit einer besonders geeigneten Seilantriebsvorrichtung anzugeben. Insbesondere soll ein Seilantriebs- oder Seiltrommelgehäuse der Seilantriebsvorrichtung, geeigneter Weise auch bei verschiedenen Fensterhebern bzw. Fensterhebersystemen (Fensterheberbaugruppen) und/oder in den Fahrzeugtüren (linke und rechte Fahrzeugtür) des gleichen Kraftfahrzeugs, möglichst universell einsetzbar sein. Des Weiteren soll ein besonders geeignetes Verfahren zur Montage einer Seiltrommel, insbesondere mit bereits aufgespultem Zugseil, in einen oder an einem Funktionsträger eines Fensterhebers angegeben werden.

Diese Aufgabe wird bezüglich des Fensterhebers eines Kraftfahrzeugs mit den Merkmalen des Anspruchs 1 und hinsichtlich des Montageverfahrens mit den Merkmalen des Anspruchs 11 erfindungsgemäß gelöst. Vorteilhafte Ausgestaltungen und Weiterbildungen sind Gegenstand der Unteransprüche.

Der Fensterheber, insbesondere als Fensterhebersystem oder Fensterheberbaugruppe, für ein Kraftfahrzeug weist einen Funktionsträger für mindestens eine einen Schienengleiter, insbesondere mit Mitnehmerfunktion zur Halterung einer Fahrzeugscheibe, schiebebeweglich führende Führungsschiene und eine Seilantriebsvorrichtung auf. Der Funktionsträger, der beispielsweise ein Bestandteil eines Türmoduls einer Kraftfahrzeugtür ist, ist geeigneter Weise ein plattenartiges Bauteil, das als ein Formteil mit Prägungen und/oder Konturen ausgeführt und beispielsweise als ein Kunststoff-Spitzgussteil oder als ein Stanz-Biegeteil aus einem Metallblech ausgeführt ist. Insbesondere kann die oder jede Führungsschiene in den Funktionsträger als Schienenkontur für den Schienengleiter integriert sein.

Unter "Fensterheber" wird hier und im Folgenden auch eine Fensterheberbaugruppe oder, insbesondere synonym, ein Fensterhebersystem verstanden, vorzugsweise wenn die Führungsschienen mit den daran schiebebeweglich geführten Schienengleitern und die Seilantriebsvorrichtung auf dem Funktionsträger montiert oder die Führungsschienen in den Funktionsträger integriert und die Schienengleiter sowie die Seilantriebsvorrichtung montiert sind.

Die Seilantriebsvorrichtung weist einen, insbesondere elektromotorischen, Stellantrieb und ein nachfolgend auch als Seiltrommelgehäuse bezeichnetes Seilantriebsgehäuse auf, in welches eine mit dem Stellantrieb gekoppelte oder koppelbare und um eine Drehachse drehbare Seiltrommel aufgenommen oder aufnehmbar ist. Im Falle eines eine Motorwelle aufweisenden Elektromotors des Stellantriebs ist jener ein (bürstenloser oder bürstenbehafteter) Elektromotor, der vorzugsweise mit einem Schneckengetriebe als 90°-Umlenkgetriebe gekoppelt ist. Die Motorwelle trägt einen Rotor, geeigneter Weise einen mit einer Spulen- oder Motorwicklung versehen Kommutator, der von bestromten oder bestrombaren Bürstenkohlen bestrichen ist. Der Rotor und ein geeigneter Weise ein aus Permanentmagneten gebildeter Stator sind in ein, insbesondere topfartiges, Motorgehäuse (Poltopf) des Elektromotors (Kommutatormotors) aufgenommen.

Die Seiltrommel ist mit einem Zugseil umschlungen, welche mit dem oder jedem Schienengleiter verbunden oder verbindbar ist. Geeigneter Weise ist das Zugseil im Montagezustand auf die Seiltrommel mit mehreren Windungen unter Bildung eines einlaufenden und eines auslaufenden Seilabschnitts aufgespult, wobei die Seilabschnitte über Umlenkelemente geführt sind. Die zylinderförmige Seiltrommel weist mantelseitig eine helixförmige oder schraubenartige Seilrille (Seilnut) auf, in welcher das Zugseil einliegt und trommelseitig geführt ist.

Das Seilantriebsgehäuse weist eine, vorzugsweise kreisförmige oder kreisrunde, Bodenplatte und eine Anzahl an Wandelementen auf, zwischen denen die Seiltrommel angeordnet ist oder wird. Die Wandelemente sind zweckmäßigerweise an die Bodenplatte angeformt und erstrecken sich - bezogen auf die Drehachse der Seiltrommel - axial. Besonders vorteilhaft sind die Wandelemente als zylindermantelartige Axialabschnitte ausgeführt, von denen bevorzugt drei solche Elemente bzw. Abschnitte vorgesehen und zwischen denen Ausnehmungen oder Zwischenräume gebildet sind. Geeigneter Weise ist in der Bodenplatte eine zentrale, vorzugsweise zylindrische, Aufnahme vorgesehen. Diese dient vorzugsweise als Aufnahme für einen Wellenzapfen eines Getriebeteils (Lager- oder Fügezapfens) des Stell- oder Seilantriebs.

Der Funktionsträger weist eine Fügekontur zur Herstellung einer Formschlussverbindung, insbesondere eines axialen Formschlusses, mit dem Seilantriebs- oder Seiltrommelgehäuse auf. Die trägerseitige Fügekontur ist umfangsseitig einer trägerseitigen Durchgangsöffnung angeordnet, über welche die Ankopplung des Stell- oder Seilantriebs an die im Seilantriebs- bzw. Seiltrommelgehäuse einsitzende (aufgenommene, angeordnete) Seiltrommel erfolgt oder hergestellt ist.

Unter einem "Formschluss" oder einer "formschlüssigen Verbindung (Formschlussverbindung)" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Das Seilantriebsgehäuse weist mindestens eine in Umfangsrichtung (azimutal) zugängliche Fügenut auf. Die Seiltrommel weist mindestens ein radiales Fügeelement auf, welches durch eine Drehbewegung des Seilantriebsgehäuses gegenüber der Seiltrommel - oder umgekehrt durch eine Drehbewegung der Seiltrommel gegenüber dem Seilantriebsgehäuse - in die gehäuseseitige Fügenut einführbar ist. Das oder jedes trommelseitige Fügeelement ist geeigneter Weise ein ringförmiges Radialsegment, das dem Trommelkörper oder Trommelmantel der Seiltrommel radial überstehen.

Gemäß einer zweckmäßigen Weiterbildung weist das Seilantriebsgehäuse mindestens ein Rastelement zum Verrasten der Seiltrommel mit dem Seilantriebsgehäuse auf. Das Rastelement ist geeigneter Weise an der Bodenplatte und/oder an einer an der Bodenplatte (zentral) angeordneten, insbesondere hülsenartigen, Aufnahme für einen Wellen- oder Getriebezapfen des Seilantriebsgehäuses vorgesehen. Das dortige Rast- oder Fügeelement erstreckt sich vorzugsweise radial und greift im Zuge der Montage der Seiltrommel in eine korrespondierende, trommelseitige Nut (Ringnut) ein.

Zusätzlich oder alternativ sind besonders bevorzugt im Bereich zwischen den axialen Wandelementen des Seilantriebsgehäuses radial äußere und/oder radial innere Rastelemente vorgesehen. Die radial äußeren Rastelemente werden geeigneter Weise von (den) radialen Fügeelementen der Seiltrommel im Zuge des Einsetzens der Seiltrommel in das Seilantriebsgehäuse unter Herstellung einer Rastverbindung hintergriffen.

Die Seiltrommel weist geeigneter Weise eine zentrale Aufnahmeöffnung mit einer trommelseitigen Fügekontur zur Herstellung einer, vorzugsweise formschlüssigen, Fügeverbindung mit dem Stellantrieb auf. Das jeweilige radiale Fügeelement der Seiltrommel ist vorzugsweise an derjenigen Stirnseite der Seiltrommel angeformt, welche der Stirnseite mit der zentralen Aufnahmeöffnung gegenüberliegt. Zweckmäßigerweise sind gehäuseseitige Fügenuten für trommelseitige Fügeelemente in die gehäuseseitigen Wandelemente, vorzugsweise an deren Übergang zur Bodenplatte, vorgesehen.

Bei der Montage wird die Seiltrommel in das Seilantriebsgehäuse (Seiltrommelgehäuse) eingesetzt. Dabei gelangen die trommelseitigen Fügeelemente in die Ausnehmungen zwischen benachbarten, gehäuseseitigen Wandelementen, so dass die Seiltrommel anschließend relativ zum Seilantriebsgehäuse gedreht werden kann und dabei im Zuge der Drehbewegung die trommelseitigen Fügeelemente in die gehäuseseitigen Fügenuten gelangen. Die derart hergestellte Verbindung der Seiltrommel mit dem Seilantriebsgehäuse erfolgt somit nach Art reines Steck-Dreh-Verschlusses oder Bajonettverschlusses.

Bei der Ausbildung des Seilantriebsgehäuses mit den, vorzugsweise bodenseitigen und zwischen den axialen Wandelementen vorgesehenen, Rastelementen erfolgt im Zuge des Einsetzens eine Verrastung der trommelseitigen Fügelemente mit den gehäuseseitigen Rast- oder Fügelementen, wobei die Seiltrommel anschließend im Seilantriebsgehäuse axial gesichert und darin drehbar angeordnet bzw. aufgenommen ist.

Vorteilhafterweise ist das Zugseil auf die Seiltrommel bereits aufgespult, wenn diese mittels des Steck-Dreh-Verschlusses in das Seilantriebsgehäuse eingesetzt und anschließend die Formschlussverbindung mit der trägerseitigen Fügekontur hergestellt wird. **In** der Formschlussverbindung des Seilantriebsgehäuses mit der trägerseitigen Fügekontur ist die Seiltrommel im Seilantriebsgehäuse frei drehbar, indem die trommelseitigen Fügeelemente in beiden Drehrichtungen durch die in Umfangsrichtung beidseitig offenen gehäuseseitigen Fügenuten hindurch gleiten können.

Gemäß einer zweckmäßigen Weiterbildung sind die Wandelemente des Seilantriebsgehäuses in Axialrichtung stufenförmig ausgeführt. Alternativ kann zwischen dem Wandelement und der Bodenlatte des Seilantriebsgehäuses eine Fase oder ein fasenartiger Übergang gebildet oder vorgesehen sein. Geeigneter Weise ist zwischen einem radial äußeren und einem radial inneren Wandbereich des jeweiligen Wandelements ein, insbesondere ring- oder ringsegmentförmiger, Anlagekragen gebildet. Vorteilhafterweise ist mittels der Stufenform oder mittels des fasenartigen Übergangs zwischen der Bodenplatte und dem Wandelement radial innenseitig des jeweiligen Wandelementes die gehäuseseitige Fügenut für das trommelseitige, radial ausgestellte Fügelement gebildet.

Weiter vorteilhaft korrespondiert der, insbesondere mittels der Stufenform, radial außenseitig der Wandelemente gebildete, gehäuseseitige Anlagekragen mit einem im Bereich der Fügekontur des Funktionsträgers vorgesehenen (trägerseitigen) Stützkragen. Mit anderen Worten weisen das oder jedes Wandelement des Seilantriebsgehäuses und die Fügekontur des Funktionsträgers korrespondierende Anlage- bzw. Stützkonturen auf, die einen axialen Anschlag für das Seilantriebsgehäuse mit darin aufgenommener Seiltrommel mit aufgespultem Zugseil bereitstellen, zumindest während oder im Zuge der Herstellung der Füge- oder Formschlussverbindung zwischen dem Seilantriebsgehäuse und dem Funktionsträger.

In vorteilhafter Ausgestaltung weist die trägerseitige Fügekontur eine Anzahl an Rastelementen, insbesondere in Form axialer Rastarme mit radial einwärts gerichteten Rasthaken, auf. Die trägerseitigen Rastelemente übergreifen in der Formschlussverbindung mit dem Seilantriebsgehäuse dessen Bodenplatte auf der den gehäuseseitigen Wandelementen abgewandten Plattenseite.

Gemäß einer geeigneten Weiterbildung der trägerseitigen Fügekontur weist diese eine Anzahl von, insbesondere zylinderförmigen, koaxialen Wandabschnitten auf. Der zumindest während oder im Zuge der Herstellung der Füge- oder Formschlussverbindung wirksame (axiale) Anschlag für das Seilantriebsgehäuse mit darin bereits aufgenommener und vom Zugseil umschlungener Seiltrommel ist trägerseitig von einem radial inneren dieser koaxialen Wandabschnitt der Fügekontur des Funktionsträgers bereitgestellt. Dieser bildet eine, vorzugsweise umfangsseitig unterbrochene, Anlagefläche als Stützkontur für das Seilantriebsgehäuse.

Ein weiterer, insbesondere mittlerer, dieser koaxialen Wandabschnitte bildet eine weitere, vorzugsweise umfangsseitig wiederum unterbrochene, Anlagefläche als Stützkontur für das Seilantriebsgehäuse. Ein (radial) äußerer der koaxialen Wandabschnitte der Fügekontur des Funktionsträgers weist geeigneter Weise eine, vorzugsweise konische, Anlagefläche für die Bodenplatte des Seilantriebsgehäuses mit darin eingesetzter Seiltrommel auf. Auch kann die gehäuseseitige Bodenplatte einen (korrespondierenden) konischen Plattenrand ausweisen.

Der (radial) äußerer der koaxialen Wandabschnitte trägt vorzugsweise die Rastelemente oder Rastarme. Deren Rasthaken überragen die koaxialen Wandabschnitte der trägerseitigen Fügekontur axial. Geeigneter Weise ist das Seiltrommelgehäuse mit darin eingesetzter Seiltrommel in der Fügekontur des Funktionsträgers drehfest gehalten. Vorzugsweise dienen hierzu umfangsseitige Ausnehmungen oder Axialnuten in der trägerseitigen Fügekontur bzw. zwischen deren koaxialen Wandabschnitten, in welche Axialnuten die axial orientierten Wandelemente des Seilantriebsgehäuse, insbesondere in Umfangsrichtung (azimutal) formschlüssig, eingreifen.

In den Wandabschnitten sind zudem, vorzugsweise zwei, Ausnehmungen vorgesehen, über welche der ein- bzw. auslaufende Seilabschnitt des Zugseils aus dem Seilantriebsgehäuse und aus der trägerseitigen Fügekontur herausgeführt ist oder wird. Dabei fluchten die gehäuseseitigen Ausnehmungen zwischen den Wandelementen des Seilantriebsgehäuses mit den Ausnehmungen der trägerseitigen Fügekontur.

Im Zuge der Füge- oder Formschlussverbindung ist vorteilhafterweise mittels der trägerseitigen Wandabschnitte die Einsetztiefe des Seilantriebsgehäuses in die trägerseitige Fügekontur axial begrenzt. Zudem ist die Seiltrommel mit aufgespultem Zugseil im Seilantriebsgehäuse durch den Drehverschluss gesichert. Sobald der Seil- oder Stellantrieb mit der Seiltrommel über die von der trägerseitigen Fügekontur umgebenen Durchgangsöffnung gekoppelt ist, ist die Seiltrommel in beide Axialrichtungen axial gesichert und im Seilantriebsgehäuse frei drehbar.

Bei dem Verfahren zur Montage einer Seiltrommel für ein Zugseil an einem Funktionsträger wird die Seiltrommel mit bereits aufgespultem Zugseil in das Seilantriebsgehäuse (Seiltrommelgehäuse) eingesetzt. Anschließend wird das Seilantriebs- bzw. Seiltrommelgehäuse mit darin aufgenommener und vom Zugseil umschlungener Seiltrommel mit dem Funktionsträger, insbesondere axial, formschlüssig gefügt.

Nachfolgend wird ein Ausführungsbeispiel der Erfindung anhand einer Zeichnung näher erläutert. Darin zeigen:
- Fig. 1: in schematischer Darstellung einen Fensterheber (Fensterheberbaugruppe, Fensterhebersystem) mit einem plattenartigen Funktionsträger und mit einer Seilantriebsvorrichtung sowie mit zwei Führungsschienen mit daran geführten und mit der Seilantriebsvorrichtung verbundenen Schienengleitern mit Mitnehmerfunktion für eine (Fahrzeug-)Fensterscheibe,
- Fig. 2: in perspektivischer Darstellung einen Ausschnitt II aus Fig. 1 in größerem Maßstab mit einem mit dem Funktionsträger gefügten Seilantriebsgehäuse mit einliegender Seiltrommel mit Blick auf eine Bodenplatte des in einer trägerseitigen Fügekontur verrasteten Seilantriebsgehäuses mit einer oder für eine Seiltrommel,
- Fig. 3: in einer Explosionsdarstellung die Seilantriebsvorrichtung mit dem Seilantriebsgehäuse und mit der Seiltrommel auf der die Fügekontur aufweisenden Trägerseite des (ausschnittsweise gezeigten) Funktionsträgers sowie mit dem Seilantrieb (Stellantrieb) auf der anderen Trägerseite,
- Fig. 4: in perspektivischer Darstellung ausschnittsweise den Funktionsträger mit Blick auf dessen Fügekontur im Bereich einer trägerseitigen Durchgangsöffnung als Koppel- oder Koppelschnittstelle zwischen der Seiltrommel und dem Stellantrieb (Seilantrieb),
- Fig. 5: in perspektivischer Darstellung das Seilantriebsgehäuse (Seiltrommelgehäuse) mit an einer Bodenplatte angeformten Wandelementen,
- Fig. 6: in perspektivischer Darstellung die Seiltrommel mit radial orientierten Fügelementen an einer Trommelstirnseite,
- Fig. 7: das Seilantriebsgehäuse (Seiltrommelgehäuse) mit darin aufgenommener Seiltrommel mit aufgespultem Zugseil in einer perspektivischen Draufsicht auf eine Aufnahmeöffnung mit trommelseitiger Fügekontur für den Stellantrieb,
- Fig. 8: in perspektivischer Darstellung eine Variante des Seilantriebsgehäuses (Seiltrommelgehäuses) mit Rastelementen zur Herstellung einer Fügeverbindung des Seilantriebsgehäuses mit der Seiltrommel, und
- Fig. 9: in einer perspektivischen Darstellung die in das Seilantriebsgehäuse (Seiltrommelgehäuse) gemäß Fig. 8 aufgenommene und mit diesem verrastete Seiltrommel (ohne Zugseil).

Einander entsprechende Teile und Größen sind in allen Figuren mit den gleichen Bezugszeichen versehen.

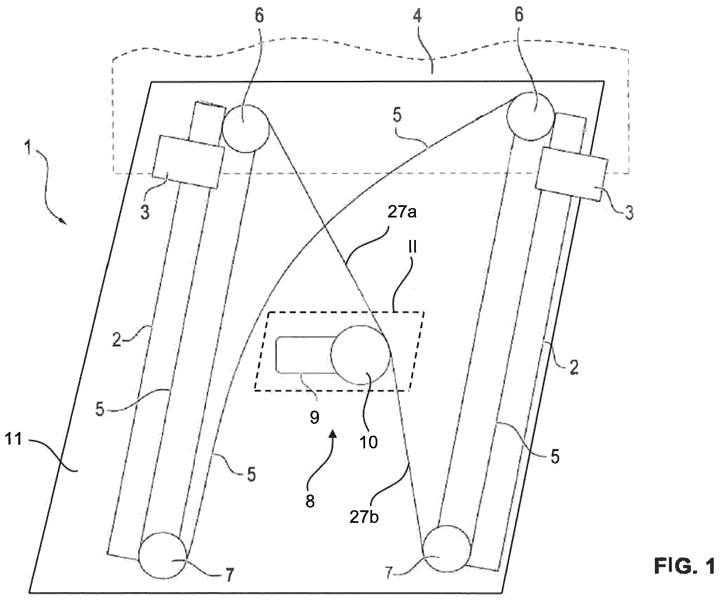

Fig. 1 zeigt einen Fensterheber 1 eines oder für ein Kraftfahrzeug, im Ausführungsbeispiel einen sogenannten zweitrangigen Seilfensterheber, mit zwei parallelen Führungsschienen 2, an denen Schienengleiter 3 mit Mitnehmerfunktion schiebebeweglich geführt sind. An den Schienengleitern 3 ist eine Fensterscheibe 4 gehalten, beispielsweise klemmfixiert. Die Schienengleiter 3 sind mit einem Zugseil 5 verbunden, das über obere und untere Umlenkelemente 6 bzw. 7, vorzugsweise in Form von Umlenkrollen, geführt und an eine Seilantriebsvorrichtung 8 gekoppelt ist. Eine Drehbewegung der bevorzugt elektromotorischen Seilantriebsvorrichtung 8 führt zu einem Verfahren der Fensterscheibe 4 in eine Offenstellung oder - in Gegenrichtung - in eine Schließstellung.

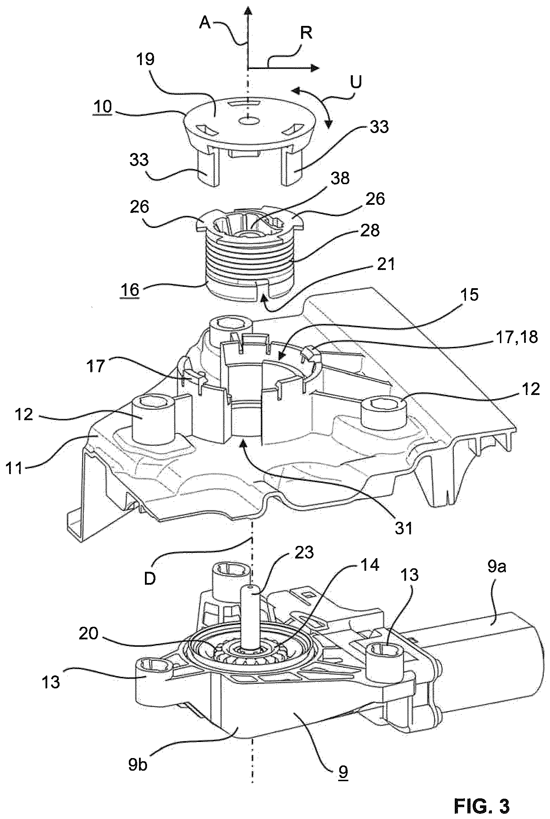

Die Seilantriebsvorrichtung 8 weist einen Stell- oder Seilantrieb 9 und ein Seiltrommel- oder Seilantriebsgehäuse 10 auf, in welches eine mit dem Stellantrieb 9 gekoppelte Seiltrommel um eine Drehachse D (Fig. 3) drehbar aufgenommen ist. Die Seiltrommel ist von dem mit den Schienengleitern 3 verbundenen Zugseil 5 umschlungen. Der Stellantrieb 9 weist in nicht näher dargestellter Art und Weise einen Elektromotor auf, der mit einem Getriebe gekoppelt ist. Die Seilantriebsvorrichtung 8 ist auf einem Funktionsträger 11 montiert, auf dem die Führungsschienen 2 montiert sind oder in diesen integriert sein können. Mit anderen Worten kann der Funktionsträger 11, beispielsweise als Bestandteil eines Türmoduls einer Kraftfahrzeugtür, ein Formteil mit darin bereits eingebrachten Schienenkonturen als Führungsschienen 2 für die Schienengleiter 3 sein. Auch können die Umlenkelemente 6, 7 bereits im Funktionsträger 11 ausgeformt sein.

Der Fensterheber 1 mit den Führungsschienen 2 und den daran geführten Schienengleitern 3 sowie mit der Seilantriebsvorrichtung 8 inklusive dem Zugseil 5, dem Seilantriebsgehäuse 10 und der Seiltrommel kann hier und im Folgenden auch als Fensterheberbaugruppe oder Fensterhebersystem bezeichnet werden.

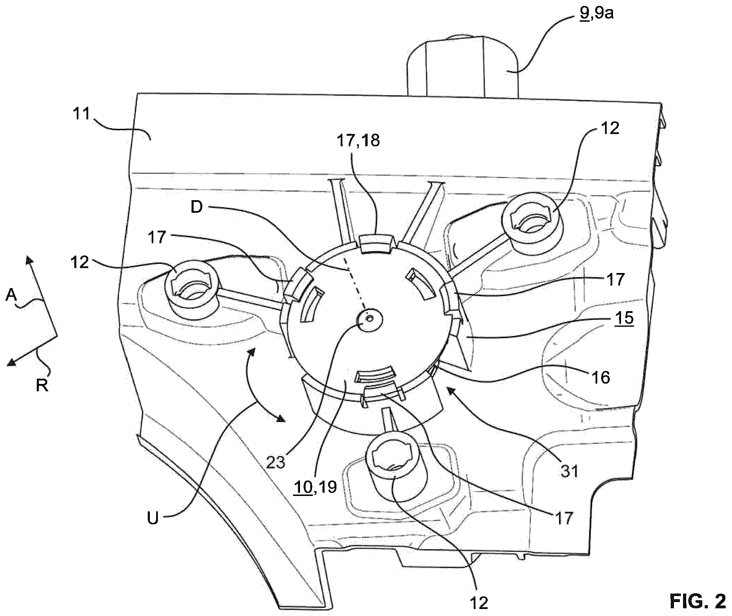

Die Figuren 2 und 3 zeigen ausschnittsweise denjenigen Bereich des Funktionsträgers 11, in dem die Seilantriebsvorrichtung 8 angeordnet und trägerseitig montiert ist. **In** Fig. 2 erkennbar sind trägerseitige Befestigungsstellen 12 vorgesehen, im Ausführungsbeispiel drei sternförmig angeordnete Befestigungsstellen 12, an denen der Stellantrieb 9 mittels Füge- oder Schraubzapfen 13 an dem Funktionsträger 11 befestigt, beispielsweise schraubbefestigt, ist.

Zudem ist in Fig. 2 ein Motorgehäuse 9a eines Elektromotors erkennbar, der mit einem in Fig. 3 gezeigten Getriebe- oder Drehzapfen 14 des Stellantriebs (Seilantriebs) 9 der Seilantriebsvorrichtung 8 gekoppelt ist. Der Elektromotor des Stellantriebs 9 ist mit einem Schneckengetriebe als 90°-Umlenkgetriebe gekoppelt, das in einem Getriebegehäuse 9b des Stellantriebs 9 angeordnet ist und den Drehzapfen 14 aufweist bzw. antreibt. **In** nicht näher dargestellter Art und Weise trägt eine Motorwelle einen mit einer Spulen- oder Motorwicklung versehenen Kommutator, der von bestromten oder bestrombaren Bürstenkohlen bestrichen ist. Der Rotor und ein aus Permanentmagneten gebildeter Stator sind im topfartigen Motorgehäuse 9a angeordnet.

Bei der gezeigten, bevorzugten Ausführung ist auf der dem Seil- oder Stellantrieb 9 abgewandten (gegenüberliegenden) Seite des Funktionsträgers 11 eine trägerseitige Fügekontur 15 vorgesehen, in welche das Seilantriebs- oder Seiltrommelgehäuse 10 mit darin aufgenommener Seiltrommel 16 eingesetzt und verrastet ist. Hierzu sind Rastelemente 17 der trägerseitigen Fügekontur 15 vorgesehen, deren endseitigen Rasthaken 18 eine Bodenplatte 19 des nachfolgend lediglich als Seilantriebsgehäuse bezeichneten Seilantriebs- oder Seiltrommelgehäuses 10 übergreifen. Hierdurch ist eine Formschlussverbindung hergestellt. Bezogen auf die in Fig. 3 veranschaulichte Drehachse D der Seiltrommel 16 und die hierzu koaxiale Axialrichtung A ist hierbei ein axialer Formschluss des Seilantriebsgehäuses 10 mit dem Funktionsträger 11 über dessen Fügekontur 15 als formschlüssige Fügeverbindung hergestellt.

Fig. 3 zeigt im Längsschnitt das Seilantriebsgehäuse 10 mit darin aufgenommener und um die Drehachse D drehbarer Seiltrommel 16, die über den getriebeseitigen Drehzapfen 14 mit einer Außenverzahnung 20 mit dem Stellantrieb 9 gekoppelt ist. Hierzu weist die Seiltrommel 16 eine zentrale Aufnahmeöffnung 21 mit einer trommelseitigen Fügekontur in Form einer Innenverzahnung 22 zur Herstellung einer formschlüssigen Fügeverbindung mit der Außenverzahnung 20 des Drehzapfens 14 des Stellantriebs 9 auf.

Ein getriebeseitiger Wellenzapfen 23, der die Seiltrommel 16 durchgreift, ist in eine an die Bodenplatte 19 des Seilantriebsgehäuses 10 angeformte oder in diese eingeformte Aufnahme 24 geführt. Das Seilantriebsgehäuse 10 weist mindestens eine in Umfangsrichtung U zugängliche Fügenut 25 auf. Die Seiltrommel 16 weist mindestens ein dem Trommelkörper oder Trommelmantel radial überstehendes Fügeelement 26 auf.

Im in Fig. 3 gezeigten Fügezustand des Seilantriebsgehäuses 10 mit dem Funktionsträger 11 ist die Seiltrommel 16 innerhalb des Seilantriebsgehäuses 10 um die Drehachse D in beiden Drehrichtungen frei drehbar, wobei das trommelseitige Fügeelement 26 die gehäuseseitige Fügenut 25 in beiden Drehrichtungen praktisch berührungslos passieren kann.

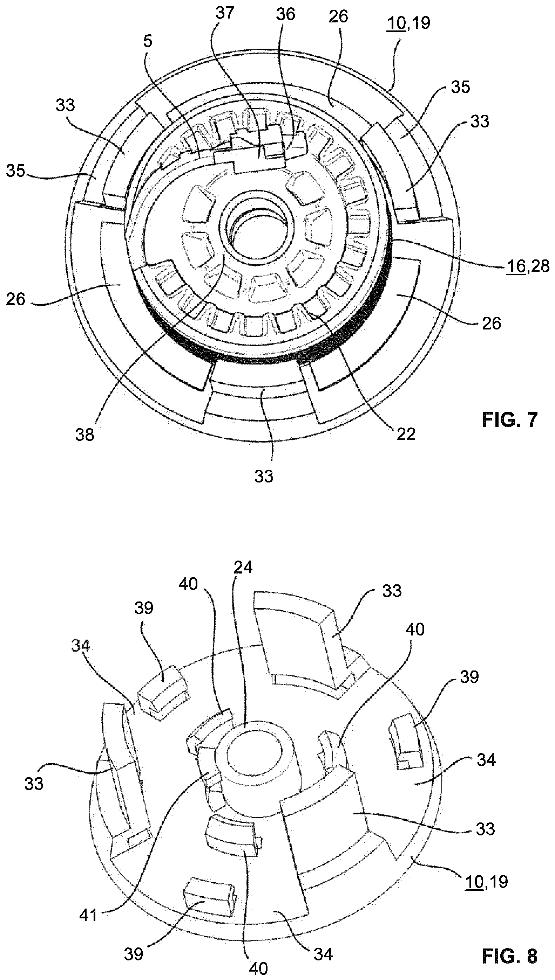

Die Seiltrommel 16 ist mit dem Zugseil 5 umschlungen, wie in Fig. 7 ersichtlich ist. Hierzu ist das Zugseil 5 im Montagezustand auf die Seiltrommel 16 mit mehreren Windungen unter Bildung eines in Figur 1 mit 27a bezeichneten einlaufenden und eines in Figur 1 mit 27b bezeichneten auslaufenden Seilabschnitts aufgespult, wobei die Seilabschnitte 27a, 27b über die Umlenkelemente 6, 7 geführt sind. Die zylinderförmige Seiltrommel 16 weist hierzu mantelseitig eine helixförmige oder schraubenartige Seilrille (Seilnut) 28 auf, in welcher das Zugseil 5 einliegt.

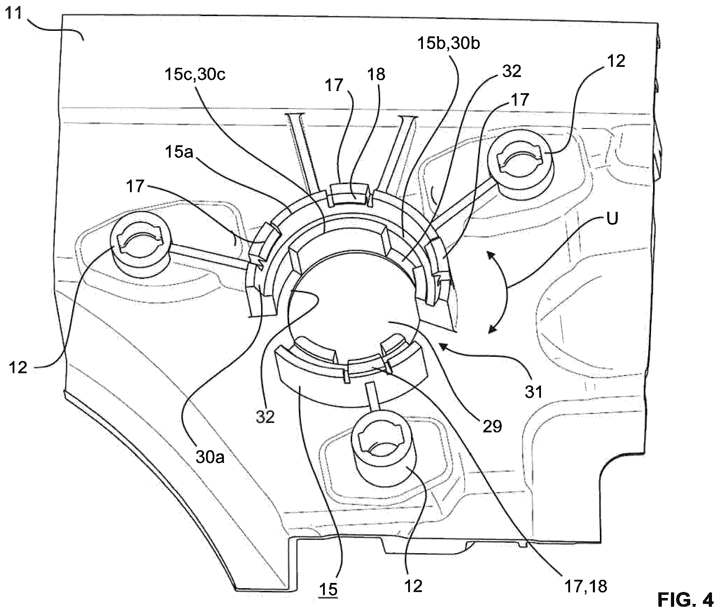

Fig. 4 zeigt den relevanten Ausschnitt des Funktionsträgers 11 im Bereich dessen Fügekontur 15 zur Herstellung der Formschlussverbindung mit dem Seilantriebs- oder Seiltrommelgehäuse 10. Die trägerseitige Fügekontur 15 ist umfangsseitig einer trägerseitigen Durchgangsöffnung 29 angeordnet, über welche die Ankopplung des Stell- oder Seilantriebs 9 an die im Seilantriebs- bzw. Seiltrommelgehäuse 10 aufgenommene Seiltrommel 16 erfolgt. Die trägerseitige Fügekontur 15 weist eine Anzahl von zylinderförmigen, koaxialen Wandabschnitten auf, nämlich einen radial äußeren Wandabschnitt 15a, einen radial mittleren Wandabschnitt 15b und einen radial inneren Wandabschnitt 15c. Der mittlere Wandabschnitt 15b weist eine geringere axiale Höhe auf als der innere und der äußere Wandabschnitt 15c bzw. 15a. Der äußere Wandabschnitt 15a überragt zudem den inneren Wandabschnitt 15b. In den äußeren Wandabschnitt 15a sind die Rastelemente 17 als Rastarme mit den Rasthaken 18 integriert. Diese überragen den inneren Wandabschnitt 15b axial, also in die zur Drehachse D koaxiale Axialrichtung A. Der mittlere Wandabschnitt 15b und der innere Wandabschnitt 15c bilden Stütz- oder Anlageflächen 30b bzw. 30c für das Seilantriebsgehäuse 10.

Wie in Fig. 3 vergleichsweise deutlich erkennbar ist, bildet der äußere Wandabschnitt 15a eine sich in Axialrichtung A zur trägerseitigen Durchgangsöffnung 29 hin verjüngende konische Anlagefläche 30a für die, vorzugsweise außenrandseitig ebenfalls konische, Bodenplatte 19 des Seilantriebsgehäuses 10. In Umfangsrichtung U zwischen den zylindermantelförmigen Wandabschnitten 15a bis 15c sind zwei Ausnehmungen oder Zwischenräume 31 in der trägerseitigen Fügekontur 15 vorgesehen. Über diese Ausnehmungen 31 sind der ein- und auslaufende Seilabschnitt 27a, 27b des Zugseils 5, im Ausführungsbeispiel unter einem Winkel von etwa 220° bis 230° zueinander, aus der trägerseitigen Fügekontur 15 herausgeführt. Die trägerseitige Fügekontur 15 weist zudem im Ausführungsbeispiel drei Axialnuten 32 im radial inneren Wandabschnitt 15c auf. Eine dieser Axialnuten 32 mündet in ein der Ausnehmungen 31.

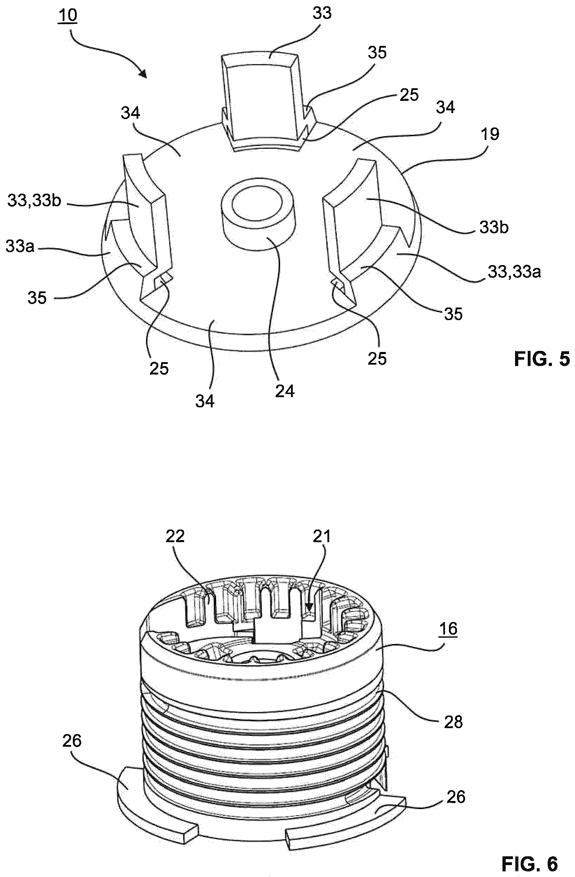

Fig. 5 zeigt perspektivisch das Seilantriebsgehäuse 10 mit der vorzugsweise kreisrunden Bodenplatte 19. An diese sind im Ausführungsbeispiel drei sich axial erstreckende Wandelemente 33 angeformt, zwischen denen die Seiltrommel 16 aufgenommen ist oder wird. Die Wandelemente 33 sind als zylindermantelartige Axialabschnitte ausgeführt, zwischen denen axiale Ausnehmungen oder Zwischenräume 34 gebildet sind. Die Wandelemente 33 sind in Axialrichtung A stufenförmig ausgeführt. Dabei ist zwischen einem radial äußeren (unteren) und einem radial inneren (oberen) Wandbereich 33a bzw. 33b des jeweiligen Wandelements 33 außenseitig ein ring- oder ringsegmentförmiger Anlagekragen 35 gebildet. Mittels der Stufenform ist innenseitig des entsprechenden Wandelementes 33 die jeweilige gehäuseseitige Fügenut 25 gebildet. Das Seilantriebsgehäuse 10 weist aufgrund der hier drei Wandelmente 33 drei solche Fügenuten 25 auf.

Der gehäuseseitige Anlagekragen 35 korrespondiert mit dem mittleren Wandabschnitt 15b der trägerseitigen Fügekontur 15. Die gehäuseseitige Bodenplatte 19 korrespondiert mit dem inneren Wandabschnitt 15c der trägerseitigen Fügekontur 15. Auf diese Weise weisen die Wandelemente 33 und die Bodenplatte 19 des Seilantriebsgehäuses 10 sowie die Fügekontur 15 des Funktionsträgers 11 korrespondierende Anlage- bzw. Stützkonturen auf. Mit anderen Worten kann sich das Seilantriebsgehäuse 10 mit deren wandelementseitigem Anlagekragen 35 und mit deren Bodenplatte 19 plattenrandseitig an den Stütz- oder Anlagefläche 30b, 30c abstützen. Diese Abstützfunktion bildet einen axialen Anschlag für das Seilantriebsgehäuse 10, insbesondere wenn diese mit der darin angeordneten Seiltrommel 16 mit aufgespultem Zugseil 5 in die trägerseitige Fügekontur 15 unter Herstellung der Füge- oder Formschlussverbindung eingesetzt wird.

Beim Einsetzten des Seilantriebsgehäuses 10 in die trägerseitige Fügekontur 15 greifen die gehäuseseitigen Wandelemente 33 in die trägerseitigen Axialnuten 32 des Wandabschnitts 15c ein. Auf diese ist das Seilantriebsgehäuse 10 in der trägerseitigen Fügekontur 15 drehfest angeordnet, während die Seiltrommel 16 um die Drehachse D rotieren kann.

Die Figuren 6 und 7 zeigen das Seilantriebsgehäuse 10 mit darin aufgenommener Seiltrommel 16 ohne bzw. mit auf diese aufgespultem Zugseil 5. Erkennbar ist die trommelseitige Aufnahmeöffnung 21 mit der Innenverzahnung 22. Die im Ausführungsbeispiel drei radial auskragenden, kreisringsegmentartigen Fügeelemente 26 der Seiltrommel 16 sind auf deren der Aufnahmeöffnung 21 abgewandten und im Montagezustand der gehäuseseitigen Bodenplatte 19 zugewandten Stirnseite vorgesehen und dort an der Seiltrommel 16 angeformt. Durch eine Drehbewegung des Seilantriebsgehäuses 10 gegenüber der Seiltrommel 16 - oder umgekehrt - greifen die trommelseitigen Fügeelemente 26 in die gehäuseseitigen Fügenuten 25 ein. In diesem Fügezustand ist die Seiltrommel 16 im Seilantriebsgehäuse 10 axial gesichert.

Fig. 7 zeigt das Seilantriebsgehäuse 10 mit darin aufgenommener Seiltrommel 16 mit auf diese aufgespultem Zugseil 5. Im Bereich der Aufnahmeöffnung 21 ist trommelrandseitig eine Nippelkammer 36 vorgesehen, in welcher ein an einem Seilende des Zugseils 5 befestigter Seilnippel 37 einsitzt. Auf derjenigen Trommelstirnseite, an der die Seiltrommel 16 die Innenverzahnung 22 aufweist, ist die gehäuseseitige Aufnahme 24 in eine trommelseitige, zentrale Ausnehmung oder Aufnahmekontur 38 der Seiltrommel 16 aufgenommen. Hierdurch, mittels der trägerseitigen Fügekontur 15 und/oder mittels des jeweiligen, nachfolgend beschriebenen Rastelements 39, 40 bzw. 41 ist die Seiltrommel 16 im Seilantriebsgehäuse 10 radial gesichert.

Gemäß der in Fig. 8 gezeigten Variante des Seilantriebsgehäuses 10 weist dieses mindestens ein solches Rastelement oder eine Anzahl solcher Rastelemente zur Herstellung einer Rast- oder Fügeverbindung der Seiltrommel 16 mit dem Seilantriebsgehäuse 10 auf. Gezeigt sind im Ausführungsbeispiel drei radial äußere Rastelemente 39, die an der Bodenplatte 19 vorgesehen, vorzugsweise aus dieser ausgeformt sind. Diese radial äußeren Rastelemente 39 sind in den gehäuseseitigen Zwischenräumen 34 zwischen in Umfangsrichtung U benachbarten Wandelementen 33 vorgesehen.

Erkennbar können auch, im Ausführungsbeispiel ebenfalls drei, radial innere Rastelemente 40 vorgesehen sein, die ebenfalls an der Bodenplatte 19 vorgesehen, vorzugsweise aus dieser ausgeformt, sowie in den gehäuseseitigen Zwischenräumen 34 angeordnet sind.

Auch kann ein einzelnes Rastelement 41 an der hülsenartigen Aufnahme 24 des Seilantriebsgehäuses 10 vorgesehen sein. Das dortige Rast- oder Fügeelement 41 erstreckt sich radial und greift im Zuge der Montage der Seiltrommel 16 in nicht näher dargestellter Art und Weise in eine trommelseitige Ringnut, insbesondere im Bereich der Ausnehmung oder Aufnahmekontur 38 der Seiltrommel 16, ein.

Das Seilantriebsgehäuse 10 kann lediglich eine der Varianten der Rastelemente 39, 40, 41 oder auch zwei dieser Varianten oder auch alle drei Varianten der Rastelemente 39, 40 und/oder 41 aufweisen.

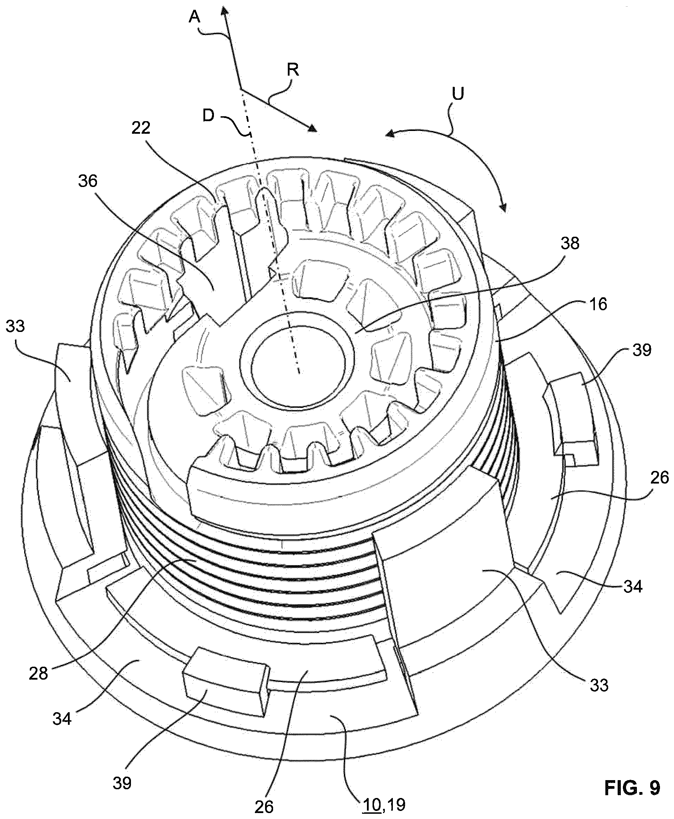

Wie in Fig. 9 erkennbar ist, werden die radial äußeren Rastelemente 39 von den radialen Fügeelementen 26 der Seiltrommel 16 im Zuge des Einsetzens in das Seilantriebsgehäuse 10 unter Herstellung einer Rastverbindung hintergriffen.

Bei der Montage wird die Seiltrommel 16 mit bereits aufgespultem Zugseil 5 in das Seilantriebsgehäuse (Seiltrommelgehäuse) 10 eingesetzt. Dabei gelangen die trommelseitigen Fügeelemente 26 in die Ausnehmungen 34 zwischen den gehäuseseitigen Wandelementen 33, so dass die Seiltrommel 16 anschließend relativ zum Seilantriebsgehäuse 10 gedreht werden kann und dabei im Zuge der Drehbewegung die trommelseitigen Fügeelemente 26 in die gehäuseseitigen Fügenuten 25 gelangen. Die derart hergestellte Verbindung der Seiltrommel 16 mit dem Seilantriebsgehäuse 10 erfolgt nach Art reines Steck-Dreh-Verschlusses oder Bajonettverschlusses. Durch den Drehverschluss ist die Seiltrommel 16 mit aufgespultem Zugseil 5 im Seilantriebsgehäuse 10 gesichert, insbesondere zur Vorbereitung und während der Montage des Seilantriebsgehäuses 10 an oder auf dem Funktionsträger 11.

Bei der Ausbildung des Seilantriebsgehäuses 10 mit dem Rastelement 41 an der Aufnahme 24 bzw. mit den bodenseitigen und zwischen den axialen Wandelementen 33 vorgesehenen Rastelementen 40 und/oder 41 erfolgt im Zuge des Einsetzens eine Verrastung der Seiltrommel 16 mit dem Seilantriebsgehäuse 10. Im Falle der radial äußeren Rastelemente 39 erfolgt die Verrastung mit den trommelseitigen Fügelemente 26, wie aus Fig. 9 ersichtlich ist. Dabei ist nach erfolgter Verrastung die Seiltrommel 10 im Seilantriebsgehäuse 10 axial gesichert und in diesem dennoch drehbar angeordnet.

Anschließend wird das Seilantriebs- bzw. Seiltrommelgehäuse 10 mit darin aufgenommener und vom Zugseil 5 umschlungener Seiltrommel 16 mit dem Funktionsträger 11 formschlüssig gefügt. Im Zuge der Füge- oder Formschlussverbindung ist mittels der entsprechenden trägerseitigen Wandabschnitte 15 die Einsetztiefe des Seilantriebsgehäuses 10 in die trägerseitige Fügekontur 11 axial begrenzt. Wenn der Stell- oder Seilantrieb 9 mit der Seiltrommel 16 über die von der trägerseitigen Fügekontur 15 umgebenen Durchgangsöffnung 29 gekoppelt ist, ist die Seiltrommel 16 in beide Axialrichtungen A axial gesichert. In der Formschlussverbindung des Seilantriebsgehäuses 10 mit der trägerseitigen Fügekontur 15 ist die Seiltrommel 16 im Seilantriebsgehäuse 10 frei drehbar, indem die trommelseitigen Fügeelemente 26 in beiden Drehrichtungen durch die gehäuseseitigen Fügenuten 25 in Umfangsrichtung U hindurch gleiten können.

Zusammenfassend betrifft die Erfindung einen Fensterheber 1 als Fensterheberbaugruppe oder als Fensterhebersystem mit einem Funktionsträger 11 und mit einer Seilantriebsvorrichtung 8 mit einem Seilantriebsgehäuse 10, in welches eine mit einem Stellantrieb 9 koppelbare Seiltrommel 16 aufgenommen ist, welche von einem Zugseil 5 umschlungen ist, wobei das Seilantriebsgehäuse 10 eine Bodenplatte 19 und Wandelemente 33 zur Aufnahme der Seiltrommel 16 aufweist, und wobei der Funktionsträger 11 eine Fügekontur 15 zur Herstellung einer Formschlussverbindung mit dem Seiltrommelgehäuse 10 aufweist.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

Zudem kann die beschriebene Lösung nicht nur in dem speziell dargestellten Anwendungsfall zum Einsatz kommen, sondern auch in ähnlicher Ausführung bei anderen Kraftfahrzeug-Anwendungen, wie zum Beispiel bei Tür- und Heckklappensystemen, bei einsträngigen Fensterhebern, bei Fahrzeugschlössern, bei verstellbaren Sitz- und Innenraumsystemen sowie bei elektrischen Antrieben, Steuerungen, Sensoren und deren Anordnung im Fahrzeug.

### Bezugszeichenliste

- 1: Fensterheber/-baugruppe/-system
- 2: Führungsschiene
- 3: Schienengleiter
- 4: Fensterscheibe
- 5: Zugseil/Innenzug
- 6: oberes Umlenkelement
- 7: unteres Umlenkelement
- 8: Seilantriebsvorrichtung
- 9: Stell-/Seilantrieb
- 9a: Motorgehäuse
- 9b: Getriebegehäuse
- 10: Seilantriebs-/Seiltrommelgehäuse
- 11: Funktionsträger
- 12: Befestigungsstelle
- 13: Füge-/Schraubzapfen
- 14: Getriebe-/Drehzapfen
- 15: trägerseitige Fügekontur
- 15a: äußerer Wandabschnitt
- 15b: mittlerer Wandabschnitt
- 15c: innerer Wandabschnitt
- 16: Seiltrommel
- 17: Rastelement
- 18: Rasthaken
- 19: Bodenplatte
- 20: Außenverzahnung
- 21: Aufnahmeöffnung
- 22: Innenverzahnung
- 23: Wellen-/Getriebezapfen
- 24: Aufnahme
- 25: Fügenut
- 26: Fügeelement
- 27a: einlaufender Zugseilabschnitt
- 27b: auslaufender Zugseilabschnitt
- 28: Seilnut
- 29: Durchgangsöffnung
- 30a: konische Anlagefläche
- 30b: Stütz-/Anlagefläche
- 30c: Stütz-/Anlagefläche
- 31: trägerseitige Ausnehmung/Zwischenraum
- 32: Axialnut
- 33: Wandelement
- 33a: äußerer (unterer) Wandbereich
- 33b: innerer (oberer) Wandbereich
- 34: gehäuseseitige Ausnehmung/Zwischenraum
- 35: Anlagekragen
- 36: Nippelkammer
- 37: Seilnippel
- 38: Ausnehmung/Aufnahmekontur
- 39: Rastelement
- 40: Rastelement
- 41: Rastelement

- A: Axialrichtung
- D: Drehachse
- U: Umfangsrichtung

## Patentansprüche

1. Fensterheber (1) für ein Kraftfahrzeug, aufweisend einen Funktionsträger (11) für mindestens eine einen Schienengleiter (3) zur Halterung einer Fahrzeugscheibe (4) schiebebeweglich führende Führungsschiene (2) und eine Seilantriebsvorrichtung (8), die einen Stellantrieb (9) und ein Seilantriebsgehäuse (10) aufweist, in welches eine mit dem Stellantrieb (9) koppelbare und um eine Drehachse (D) drehbare Seiltrommel (16) aufgenommen oder aufnehmbar ist, welche von einem Zugseil (5) umschlungen oder umschlingbar ist,
- wobei das Seilantriebsgehäuse (10) eine Bodenplatte (19) und eine Anzahl von Wandelementen (33) aufweist, zwischen denen die Seiltrommel (16) angeordnet oder aufnehmbar ist, und
- wobei der Funktionsträger (11) umfangsseitig einer Durchgangsöffnung (29) für die Ankopplung der Seiltrommel (16) an den Stellantrieb (9) eine Fügekontur (15) zur Herstellung einer Formschlussverbindung mit dem Seiltrommelgehäuse (10) mit darin eingesetzter Seiltrommel (10) aufweist,
**dadurch gekennzeichnet,**
- **dass** das Seilantriebsgehäuse (10) mindestens eine in Umfangsrichtung (U) zugängliche Fügenut (25) aufweist, und
- **dass** die Seiltrommel (16) mindestens ein radiales Fügeelement (26) aufweist, welches durch eine Drehbewegung des Seilantriebsgehäuses (10) gegenüber der Seiltrommel (16) in die gehäuseseitige Fügenut (25) gelangt oder einführbar ist.

2. Fensterheber (1) nach Anspruch 1,
**dadurch gekennzeichnet,**
**dass** die Seiltrommel (16) mit bereits aufgespultem Zugseil (5) in das Seilantriebsgehäuse (10) eingesetzt oder einsetzbar ist.

3. Fensterheber (1) nach Anspruch 1 oder 2,
**dadurch gekennzeichnet,**
**dass** die Seiltrommel (16) in einem Vormontagezustand im Seilantriebsgehäuse (10) in diesem nach Art eines Dreh- oder Bajonettverschlusses axial gesichert ist.

4. Fensterheber (1) nach einem der Ansprüche 1 bis 3,
**dadurch gekennzeichnet,**
- **dass** die Seiltrommel (16) eine zentrale Aufnahmeöffnung (21) mit einer trommelseitigen Fügekontur (22) zur Herstellung einer Fügeverbindung mit dem Stellantrieb (9) aufweist, und
- **dass** die radialen Fügeelemente (26) an die der zentralen Aufnahmeöffnung (21) gegenüberliegende Stirnseite der Seiltrommel (16) angeformt sind.

5. Fensterheber (1) nach einem der Ansprüche 1 bis 4,
**dadurch gekennzeichnet,**
- **dass** die Wandelemente (33) des Seilantriebsgehäuses (10) in Axialrichtung (A) stufenförmig sind, und/oder
- **dass** zwischen dem Wandelement (33) und der Bodenlatte (19) des Seilantriebsgehäuses (10) eine Fase oder ein Übergang einer Fase gebildet oder vorgesehen ist, und/oder
- **dass**, insbesondere zwischen einem radial äußerer und einem radial inneren Wandbereich (33a, 33b), außenseitig des jeweiligen Wandelements (33) ein gehäuseseitiger Anlagekragen (35) und/oder innenseitig des jeweiligen Wandelements (33) die oder eine gehäuseseitige Fügenut (25) gebildet ist.

6. Fensterheber (1) nach einem der Ansprüche 1 bis 5,
**dadurch gekennzeichnet,**
**dass** die Fügekontur (15) des Funktionsträgers (11) eine Anzahl an Rastelementen (17) aufweist, welche in der Formschlussverbindung mit dem Seilantriebsgehäuse (10) dessen Bodenplatte (19) auf der den Wandelementen (33) abgewandten Plattenseite übergreifen.

7. Fensterheber (1) nach einem der Ansprüche 1 bis 6,
**dadurch gekennzeichnet,**
**dass** die Fügekontur (15) des Funktionsträgers (11) eine Anzahl von koaxialen Wandabschnitten (15a, 15b, 15c) aufweist,
- wobei ein radial innerer Wandabschnitt (15c) der Fügekontur (15) des Funktionsträgers (11) eine Anlagefläche (30c) für die Wandelemente (33) des Seilantriebsgehäuses (10) mit darin eingesetzter Seiltrommel (16) aufweist oder bildet, und/oder
- wobei ein radial mittlerer Wandabschnitt (15b) der Fügekontur (15) des Funktionsträgers (11) eine Anlagefläche (30b) für die Bodenplatte (19) des Seilantriebsgehäuses (10) mit darin eingesetzter Seiltrommel (16) aufweist oder bildet, und/oder
- wobei ein radial äußerer Wandabschnitt (15a) der Fügekontur (15) des Funktionsträgers (11) eine konische Anlagefläche (30a) für die Bodenplatte (19) des Seilantriebsgehäuses (10) mit darin eingesetzter Seiltrommel (16) aufweist oder bildet.

8. Fensterheber (1) nach einem der Ansprüche 1 bis 7,
**dadurch gekennzeichnet,**
**dass** das Seilantriebsgehäuse (10) mindestens ein Rastelement (39, 40, 41) zum Verrasten der Seiltrommel (16) mit dem Seilantriebsgehäuse (10) aufweist.

9. Fensterheber (1) nach Anspruch 8,
**dadurch gekennzeichnet,**
**dass** das oder jedes Rastelement (39, 40, 41) an der Bodenplatte (19) und/- oder an einer Aufnahme (24) des Seilantriebsgehäuses (10) vorgesehen ist.

10. Fensterheber (1) nach einem der Ansprüche 1 bis 9,
**dadurch gekennzeichnet,**
**dass** das Seilantriebsgehäuse (10) mit darin eingesetzter Seiltrommel (16) in der Fügekontur (15) des Funktionsträgers (11) drehfest gehalten ist.

11. Verfahren zur Montage einer Seiltrommel (16) für ein Zugseil (5) an einem Funktionsträger (11) eines Fensterhebers (1) nach einem der Ansprüche 1 bis 10,
- wobei die Seiltrommel (16) mit bereits aufgespultem Zugseil (5) in das Seiltrommelgehäuse (10) eingesetzt wird, und
- wobei das Seiltrommelgehäuse (10) mit darin aufgenommener und vom Zugseil (5) umschlungener Seiltrommel (16) mit dem Funktionsträger (11), insbesondere axial, formschlüssig gefügt wird.

## Claims

1. Window lift (1) for a motor vehicle, having a functional carrier (11) for at least one guide rail (2), which slidably guides a rail slider (3) for holding a vehicle window (4), and a cable drive device (8) which has an actuating drive (9) and a cable drive housing (10), in which a cable drum (16), which is couplable to the actuating drive (9) and is rotatable about an axis of rotation (D) and around which a traction cable (5) is wrapped or can be wrapped, is received or can be received,
- wherein the cable drive housing (10) has a base plate (19) and a number of wall elements (33), between which the cable drum (16) is arranged or can be received, and
- wherein the functional carrier (11) has, in its circumference of a through opening (29) for coupling the cable drum (16) to the actuating drive (9), a joining contour (15) for producing a form-fitting connection to the cable drum housing (10) with the cable drum (10) inserted therein,
**characterized**
- **in that** the cable drive housing (10) has at least one joining groove (25) which is accessible in the circumferential direction (U), and
- **in that** the cable drum (16) has at least one radial joining element (26) which passes or can be introduced into the housing-side joining groove (25) by means of a rotational movement of the cable drive housing (10) in relation to the cable drum (16).

2. Window lift (1) according to Claim 1,
**characterized**
**in that** the cable drum (16) with the traction cable (5) already wound thereon is inserted or can be inserted into the cable drive housing (10).

3. Window lift (1) according to Claim 1 or 2,
**characterized**
**in that**, in a preassembled state in the cable drive housing (10), the cable drum (16) is secured axially therein in the manner of a twist lock or bayonet lock.

4. Window lift (1) according to one of Claims 1 to **3,**
**characterized**
- **in that** the cable drum (16) has a central receiving opening (21) with a drum-side joining contour (22) for producing a joining connection to the actuating drive (9), and
- **in that** the radial joining elements (26) are integrally formed on that end face of the cable drum (16) which is opposite the central receiving opening (21).

5. Window lift (1) according to one of Claims 1 to **4,**
**characterized**
- **in that** the wall elements (33) of the cable drive housing (10) are stepped in the axial direction (A), and/or
- **in that** a bevel or a transition of a bevel is formed or provided between the wall element (33) and the base plate (19) of the cable drive housing (10), and/or
- **in that**, in particular between a radially outer and a radially inner wall region (33a, 33b), a housing-side abutment collar (35) is formed on the outer side of the respective wall element (33) and/or the or a housing-side joining groove (25) is formed on the inner side of the respective wall element (33).

6. Window lift (1) according to one of Claims 1 to 5,
**characterized**
**in that** the joining contour (15) of the functional carrier (11) has a number of latching elements (17) which, in the form-fitting connection with the cable drive housing (10), engage over the base plate (19) thereof on the plate side facing away from the wall elements (33).

7. Window lift (1) according to one of Claims 1 to 6,
**characterized**
**in that** the joining contour (15) of the functional carrier (11) has a number of coaxial wall portions (15a, 15b, 15c),
- wherein a radially inner wall portion (15c) of the joining contour (15) of the functional carrier (11) has or forms a contact surface (30c) for the wall elements (33) of the cable drive housing (10) with the cable drum (16) inserted therein, and/or
- wherein a radially central wall portion (15b) of the joining contour (15) of the functional carrier (11) has or forms a contact surface (30b) for the base plate (19) of the cable drive housing (10) with the cable drum (16) inserted therein, and/or
- wherein a radially outer wall portion (15a) of the joining contour (15) of the functional carrier (11) has or forms a conical contact surface (30a) for the base plate (19) of the cable drive housing (10) with the cable drum (16) inserted therein.

8. Window lift (1) according to one of Claims 1 to **7,**
**characterized**
**in that** the cable drive housing (10) has at least one latching element (39, 40, 41) for latching the cable drum (16) to the cable drive housing (10).

9. Window lift (1) according to Claim 8,
**characterized**
**in that** the or each latching element (39, 40, 41) is provided on the base plate (19) and/or on a receptacle (24) of the cable drive housing (10).

10. Window lift (1) according to one of Claims 1 to 9,
**characterized**
**in that** the cable drive housing (10) with the cable drum (16) inserted therein is held in the joining contour (15) of the functional carrier (11) for conjoint rotation.

11. Method for mounting a cable drum (16) for a traction cable (5) on a functional carrier (11) of a window lift (1) according to one of Claims 1 to 10,
- wherein the cable drum (16) with the traction cable (5) already wound thereon is inserted into the cable drum housing (10), and
- wherein the cable drum housing (10), with the cable drum (16) around which the traction cable (5) is wrapped, received therein, is joined in a form-fitting manner to the functional carrier (11), in particular axially.

## Revendications

1. Lève-vitre (1) pour un véhicule automobile, possédant un support fonctionnel (11) pour au moins un rail de guidage (2) guidant de manière coulissante une glissière de rail (3) destinée à maintenir une vitre de véhicule (4), et un dispositif d'entraînement à câble (8) qui possède un servomoteur (9) et un boîtier d'entraînement à câble (10) dans lequel est logé ou peut être logé un tambour à câble (16), autour duquel est ou peut être enroulé un câble de traction (5), peut être couplé au servomoteur (9) et peut tourner autour d'un axe de rotation (D),
- le boîtier d'entraînement à câble (10) possédant une plaque de fond (19) et un certain nombre d'éléments de paroi (33) entre lesquels le tambour à câble (16) est disposé ou peut être logé, et
- le support fonctionnel (11) possédant, du côté périphérique d'une ouverture de passage (29) destinée au couplage du tambour à câble (16) au servomoteur (9), un contour d'assemblage (15) destiné à réaliser une liaison par complémentarité de formes avec le boîtier de tambour à câble (10) dans lequel est introduit le tambour à câble (10),
**caractérisé en ce que**
- le boîtier d'entraînement à câble (10) possède au moins une rainure d'assemblage (25) accessible dans le sens périphérique (U), et
- le tambour à câble (16) possède au moins un élément d'assemblage radial (26) qui, par un mouvement de rotation du boîtier d'entraînement à câble (10) par rapport au tambour à câble (16), pénètre ou peut être introduit dans la rainure d'assemblage (25) côté boîtier.

2. Lève-vitre (1) selon la revendication 1,
**caractérisé en ce que**
le tambour à câble (16) avec le câble de traction (5) déjà enroulé est ou peut être introduit dans le boîtier d'entraînement à câble (10).

3. Lève-vitre (1) selon la revendication 1 ou 2,
**caractérisé en ce que**
le tambour à câble (16) est calé axialement dans le boîtier d'entraînement à câble (10) dans un état de pré-montage, à la manière d'une fermeture rotative ou à baïonnette.

4. Lève-vitre (1) selon l'une des revendications 1 à 3,
**caractérisé en ce que**
- le tambour à câble (16) possède une ouverture de réception centrale (21) avec un contour d'assemblage (22) côté tambour destinée à réaliser une liaison par jointoiement avec le servomoteur (9), et
- les éléments d'assemblage radiaux (26) sont moulés sur le côté frontal du tambour à câble (16) à l'opposé de l'ouverture de réception centrale (21).

5. Lève-vitre (1) selon l'une des revendications 1 à 4,
**caractérisé en ce que**
- les éléments de paroi (33) du boîtier d'entraînement à câble (10) sont disposés en gradins dans la direction axiale (A), et/ou
- un chanfrein ou une transition d'un chanfrein est formé ou prévu entre l'élément de paroi (33) et la plaque de fond (19) du boîtier d'entraînement à câble (10), et/ou
- une collerette d'appui (35) côté boîtier est formée du côté extérieur de l'élément de paroi (33) respectif et/ou ladite ou une rainure d'assemblage (25) côté boîtier est formée du côté intérieur de l'élément de paroi (33) respectif, notamment entre une zone de paroi radialement extérieure et une zone de paroi radialement intérieure (33a, 33b).

6. Lève-vitre (1) selon l'une des revendications 1 à 5,
**caractérisé en ce que**
le contour d'assemblage (15) du support fonctionnel (11) possède un certain nombre d'éléments d'encliquetage (17) qui, dans la liaison par complémentarité de formes avec le boîtier d'entraînement à câble (10), recouvrent sa plaque de fond (19) sur le côté de la plaque à l'opposé des éléments de paroi (33).

7. Lève-vitre (1) selon l'une des revendications 1 à 6,
**caractérisé en ce que**
le contour d'assemblage (15) du support fonctionnel (11) possède un certain nombre de portions de paroi coaxiales (15a, 15b, 15c),
- une portion de paroi radialement intérieure (15c) du contour d'assemblage (15) du support fonctionnel (11) possédant ou formant une surface d'appui (30c) pour les éléments de paroi (33) du boîtier d'entraînement à câble (10) dans lequel est introduit le tambour à câble (16), et/ou
- une portion de paroi radialement centrale (15b) du contour **d'assemblage** (15) du support fonctionnel (11) possédant ou formant une surface d'appui (30b) pour la plaque de fond (19) du boîtier d'entraînement à câble (10) dans lequel est introduit le tambour à câble (16), et/ou
- une portion de paroi radialement extérieure (15a) du contour d'assemblage (15) du support fonctionnel (11) possédant ou formant une surface d'appui (30a) conique pour la plaque de fond (19) du boîtier d'entraînement à câble (10) dans lequel est introduit le tambour à câble (16).

8. Lève-vitre (1) selon l'une des revendications 1 à 7,
**caractérisé en ce que**
le boîtier d'entraînement à câble (10) possède au moins un élément d'encliquetage (39, 40, 41) servant à l'encliquetage du tambour à câble (16) avec le boîtier d'entraînement à câble (10).

9. Lève-vitre (1) selon la revendication 8,
**caractérisé en ce que**
le ou chaque élément d'encliquetage (39, 40, 41) est prévu sur la plaque de fond (19) et/ou sur un logement (24) du boîtier d'entraînement à câble (10).

10. Lève-vitre (1) selon l'une des revendications 1 à 9,
**caractérisé en ce que**
le boîtier d'entraînement à câble (10) dans lequel est introduit le tambour à câble (16) est maintenu de manière solidaire en rotation dans le contour d'assemblage (15) du support fonctionnel (11).

11. Procédé de montage d'un tambour à câble (16) pour un câble de traction (5) sur un support fonctionnel (11) d'un lève-vitre (1) selon l'une des revendications 1 à 10,
- le tambour à câble (16) avec le câble de traction (5) déjà enroulé est introduit dans le boîtier d'entraînement à câble (10), et
- le boîtier du tambour à câble (10) dans lequel est logé le tambour à câble (16) autour duquel est enroulé le câble de traction (5) est assemblé par complémentarité de forme avec le support fonctionnel (11), notamment axialement.
